# EUROPÄISCHE PATENTSCHRIFT

(11) **EP 2 442 973 B1**
(45) Veröffentlichungstag und Bekanntmachung des Hinweises auf die Patenterteilung: **17.07.2013**
(21) Anmeldenummer: 10723140.9
(22) Anmeldetag: 14.06.2010
(51) Int. Cl.: B32B 5/18, B32B 15/08, B32B 27/34, B29C 39/10, B29C 39/12, B29C 37/00

(54) **VERBUNDWERKSTOFF UND VERFAHREN ZUR HERSTELLUNG EINES VERBUNDWERKSTOFFS**
COMPOSITE MATERIAL AND METHOD FOR PRODUCING A COMPOSITE MATERIAL
MATÉRIAU COMPOSITE ET PROCÉDÉ DE FABRICATION D'UN MATÉRIAU COMPOSITE

(30) Priorität: 16.06.2009 DE 102009026977
(43) Veröffentlichungstag der Anmeldung: 25.04.2012
(73) Patentinhaber: Albert Handtmann Elteka GmbH & Co. KG, 88400 Biberach/Riss (DE)
(72) Erfinder: VOLLMANN-SCHIPPER, Jörg, 88400 Biberach/Riss (DE)
(74) Vertreter: Müller Schupfner & Partner
(86) Internationale Anmeldenummer: PCT/EP2010/058298
(87) Internationale Veröffentlichungsnummer: WO 2010/146012

(56) Entgegenhaltungen:
- Dipl.-Ing. Georg Petzinger: "Anspruchsvolle Bauteile im Kunststoff-Metall-Verbund"[Online] 9. Oktober 2008 (2008-10-09), Seiten 1-4, XP002600656 Konstruktionspraxis Gefunden im Internet: URL:http://www.konstruktionspraxis.vogel.d e/themen/werkstoffe/kunststoff/articles/15 1399/> [gefunden am 2010-09-14]
- Anonym: "Neue Werkstoffe im Lieferprogramm"[Online] 11. September 2007 (2007-09-11), Seite 3PP, XP002600657 Licharz - technische Kunststoffe Gefunden im Internet: URL:http://licharz.de/index.php?id=74&lich arz=Archiv> [gefunden am 2010-09-14]
- Anonym: "Brosch 2007"[Online] 2007, Seiten 1-32, XP002600658 Innovationszentrum Ingenieurwerkstoffe Gefunden im Internet: URL:http://www.ingenieurwerkstoffe.de/docs /InnovationBrosch2007_neu_alle.pdf> [gefunden am 2010-09-14]

## Beschreibung

Die vorliegende Erfindung betrifft einen Verbundwerkstoff gemäß dem Oberbegriff des Anspruchs 1 sowie ein Verfahren zu dessen Herstellung gemäß dem Oberbegriff des Anspruchs 6.

Die Einsatzmöglichkeiten von Verbundwerkstoffen werden ständig erweitert. Außerdem werden immer wieder neue Verbundwerkstoffe entwickelt, um diese für bestimmte Verwendungszwecke einsetzen zu können. So sind beispielsweise Verbundwerkstoffe-bekannt, bei denen Glasfaser- oder Kohlefasermatten, Kunststoffe oder Holzfurnier auf ein Metallbauteil, insbesondere ein Aluminiumschaumbauteil, aufgeklebt sind. Eine solche Verklebung erfolgt häufig mittels Epoxidharz. Zum einen ist hierbei nachteilig, dass durch das Verkleben ein zusätzlicher zeit- und kostenintensiver Verfahrensschritt zur Herstellung eines solchen Verbundwerkstoffs erforderlich ist. Zum anderen sollen die Eigenschaften von Verbundwerkstoffen, insbesondere was die Verschleißbeständigkeit, die Korrosion, die chemische Beständigkeit, wie z. B. gegen Salzwasser, sowie die Trockenlaufeigenschaften angeht, verbessert werden.

Aus Dipl.-Ing. Georg Petzinger: "Anspruchsvolle Bauteile im Kunststoff-Metall-Verbund" 9. Oktober 2008 ist es bekannt, Metallbauteile mit dem Polyamid-Werkstoff Lauramid^{®} drucklos als niedrigviskose Schmelze zu umgießen. Dadurch lassen sich Kunststoff-Metall-Hybridbauteile herstellen. Aus "Neue Werkstoffe im Lieferprogramm" 11. September 2007 der Licharz GmbH ist es ebenfalls bekannt, Metallbauteile mit dem Polyamid-Werkstoff Calaumid^{®} zu ummanteln. Calaumid ist wie Lauramid ein aus dem Rohstoff Laurinlactam hergestellter Polyamid-Werkstoff.

Der vorliegenden Erfindung liegt somit die Aufgabe zugrunde, einen Verbundwerkstoff mit verbesserten Eigenschaften zu schaffen, der überdies mittels eines einfachen und kostengünstigen Verfahrens hergestellt werden kann.

Diese Aufgabe wird mit einem Verbundwerkstoff gemäß Anspruch 1 bzw. einem Verfahren zu dessen Herstellung gemäß Anspruch 6 gelöst. Vorteilhafte Weiterbildungen der Erfindung sind Gegenstand der abhängigen Ansprüche.

Ein erfindungsgemäßer Verbundwerkstoff weist ein Metallschaumbauteil, vorzugsweise ein Aluminiumschaumbauteil - wie beispielsweise als Zukaufteile nach geometrischen Vorgaben von Zulieferern erhältlich - auf, das von Lauramid zumindest teilweise umgeben bzw. umschlossen, insbesondere vollständig umgossen ist. Dadurch wird ein sehr verschleißbeständiger und gegen Salzwasser resistenter Verbund- bzw. Hybridwerkstoff mit guten Korrosions- und Trockenlaufeigenschaften und hoher chemischer Beständigkeit geschaffen, der außerdem gleichzeitig eine hohe Steifigkeit bei geringem Gewicht aufweist. Hierdurch ist der erfindungsgemäße Verbundwerkstoff sehr gut im Automobilbau und im Flugzeugbau einsetzbar. Auch bei Schienenfahrzeugen sowie zur Resonanzminderung und Stoßabsorption bzw. Dämpfung in vielen Bereichen des Maschinenbaus ist der erfindungsgemäße Verbundwerkstoff gut geeignet, ebenso wie zur Abschirmung elektromagnetischer Felder, der sogenannten EMV-Abschirmung. Ein spezielles Einsatzgebiet des erfindungsgemäßen Verbundwerkstoffs ist beispielsweise bei der Verwendung als Werkstoff für die Ladefläche von Transportern und Anhängern gegeben. Lauramid® ist ein Polyamid-Werkstoff der Klasse PA 12G, welcher von der Firma Albert Handtmann Elteka GmbH & Co. KG vertrieben wird.

Vorzugsweise ist das Metallschaumbauteil zumindest an seinen Rändern offenporig ausgestaltet, was beispielsweise durch entsprechende Sägeschnitte zum Separieren einzelner Metallbauteile von einem größeren Gussmetallschaumteil erzielt werden. Dadurch kann das Lauramid gut in die Poren des Metallbauteils eindringen und sich unter Ausbildung einer Vernetzung bzw. Verhakung innig mit dem Metallbauteil verbinden. Dadurch kann die Gefahr minimiert werden, dass sich das Lauramid von dem Metallbauteil löst, ein Kleber ist nicht nötig.

Ein besonders verschleißbeständiges, aus dem erfindungsgemäßen Verbundwerkstoff hergestelltes, Bauelement kann dann erhalten werden, wenn das Metallschaumbauteil vollständig oder zumindest im Wesentlichen vollständig von Lauramid umschlossen ist. "Im Wesentlichen vollständig umschlossen" bedeutet hier, dass das Metallschaumbauteil bis auf diejenigen Flächen von Lauramid umgeben ist, an denen ggf. Halteelemente zum Abstützen des Metallschaumbauteil in einer Gießform zum Umgießen des Metallschaumbauteils durch Lauramid während des Gießvorgangs am Metallschaumbauteil (im folgenden auch "Metallbauteil" genannt) angelegen hatten.

Gemäß einer vorteilhaften Weiterbildung der Erfindung ist das Metallbauteil als flächiges Element mit relativ geringer Dicke ausgebildet, welches zwei Hauptflächen aufweist, die ganz oder zumindest im Wesentlichen von Lauramid bedeckt sind. Damit sind die Hauptflächen jeweils gut vor Verschleiß geschützt, weisen also günstige Eigenschaften im Hinblick auf Abrieb auf. Da die kleinen Seitenflächen nicht mit Lauramid bedeckt sind, können mehrere derartige Elemente gut nebeneinander angeordnet und zusammen z.B. mit Nut-/ Federverbindungen als Fassadenelemente oder dergleichen montiert werden.

Die Dicke des Metallschaumbauteils ist von den Anforderungen an das gesamte Bauteil abhängig. In der Praxis hat sich jedoch gezeigt, dass das Lauramid vorzugsweise eine Wandstärke bzw Dicke von mindestens 5 mm aufweisen sollte. Ab diesen Dimensionen ist - beispielsweise durch eine Röntgenuntersuchung - festzustellen, dass keine oder nur unwesentliche Schädigungen an der Grenzfläche zwischen Lauramid und dem Metallbauteil vorhanden sind. Solche Schädigungen könnten z. B. durch großflächige Ablösungen (d.h. Lunker) zwischen Lauramid und Metallbauteil entstehen. Eine solche Röntgenuntersuchung dient auch der Kontrolle auf Verschmutzungen.

Die der Erfindung zugrunde liegende Aufgabe wird ferner gelöst mit einem Verfahren gemäß Anspruch 6 zur Herstellung eines Verbundwerkstoffs, bei welchem es sich vorzugsweise um einen Verbundwerkstoff gemäß vorstehender Erläuterung handelt. Das erfindungsgemäße Verfahren umfasst folgende Schritte: Es wird ein Metallschaumbauteil, vorzugsweise ein Aluminiumschaumbauteil, bereitgestellt, das mit Lauramid umgossen wird. Der Ausdruck "Umgießen" bzw. "Eingießen" soll hierbei bedeuten, dass das Lauramid in flüssiger Form in Kontakt mit dem Metallbauteil gebracht wird, um sich mit diesem zu verbinden.

Eine besonders günstige Verfahrensführung ergibt sich dadurch, dass das Metallschaumbauteil vor dem Umgießen in einer Gießform angeordnet und in dieser mittels Halteelementen fixiert wird. Als Halteelemente kommen hierbei entsprechende Halteplatten, Haltedorne oder Haltekeile in Betracht.

Die Anzahl an-Fehlern des erfindungsgemäßen Verbundwerkstoffs kann minimiert werden, wenn darauf geachtet wird, dass beim Eingießen des Lauramids in die Gießform die Temperatur der Gießform und des Metallbauteils im Bereich von 140 °C bis 160 °C gehalten wird, wobei ein Bereich von 150 °C bis 154 °C bevorzugt sein kann. Ein besonders bevorzugter Wert für die Temperatur der Gießform kann dabei 152 °C betragen.

Die Qualität des erfindungsgemäßen Verbundwerkstoffs kann noch weiter verbessert werden, wenn das Metallschaumbauteil vor dem Umgießen auf eine Temperatur im Bereich von 120 °C bis 160 °C, insbesondere von 130 °C bis 150 °C vorgeheizt wird, wobei ein Wert von 140 °C beim Vorheizen des Metallbauteils am stärksten bevorzugt sein kann. Außerdem beträgt vorzugsweise die Temperatur des geschmolzenen Lauramids beim Umgießen 150 °C bis 170 °C und weiter vorzugsweise 158 °C bis 162 °C, wobei ein Wert von 160 °C am stärksten bevorzugt ist.

Das geschmolzene Lauramid wird vor dem Einfüllen in die Form gerührt. Rührzeiten von 5 bis 15 Minuten, insbesondere 7 bis 10 Minuten und besonders bevorzugt 8 bis 8,5 Minuten, sind dabei vorteilhaft, da das Lauramid dann eine Viskosität annimmt, die eine besonders enge Verbindung mit dem Aluschaum ermöglicht. Bei Rührzeiten von 8 bis 8,5 Minuten und bei Temperaturen von 160 °C kann die Schaumstruktur durch das Lauramid sogar vollständig ausgegossen werden, wodurch sich eine praktisch nicht mehr trennbare Verbindung zwischen dem-Kunststoff und dem Metallbauteil ergibt.

In der Praxis hat es sich zur Erzielung einer guten Qualität des erfindungsgemäßen Verbundwerkstoffs als vorteilhaft erwiesen, das Metallbauteil vor dem Eingießen bzw. Umgießen zu waschen oder einer Ultraschallbehandlung zur Reinigung zu unterziehen. Alternativ kann es Vorteile bringen, ein Waschen oder eine Ultraschallbehandlung vor dem Eingießen bzw. Umgießen zu unterlassen.

Der Kern der Erfindung liegt in der Herstellung eines Leichtbau-Verbund-werkstoffs, dessen Verbund sich mechanisch nicht mehr trennen lässt. Der Verbund besteht vorzugsweise nur aus Lauramid und dem Metallschaumbauteil, insbesondere Aluminiumschaumteil, ohne zusätzliche Verbindungselemente wie Kleber oder Harze. Der Verbund wird in einem Arbeitsschritt hergestellt und ist nach dem Gießprozess abgeschlossen. Es sind keine zusätzlichen Prozesse oder Maschinen notwendig. Daher sind keine zusätzlichen Investitionen erforderlich.

Weitere Vorteile, Merkmale und Besonderheiten der vorliegenden Erfindung ergeben sich aus der nachfolgenden ausführlichen Beschreibung vorteilhafter Ausgestaltungen des erfindungsgemäßen Verbundwerkstoffs bzw. des entsprechenden Verfahrens zur Herstellung hiervon. Es zeigen:
- Fig. 1: in Seitenschnittansicht eine Gießform mit einem Verbundwerkstoff gemäß einer ersten Ausführungsform der Erfindung, der durch Halteelemente in der Gießform gehalten ist,
- Fig. 2: in Seitenschnittansicht eine Gießform mit einer zweiten Ausführungsform des erfindungsgemäßen Verbundwerkstoffs, der durch Halteelemente in der Gießform gehalten ist,
- Fig. 3: in Schnittansicht von oben eine Gießform mit einer dritten Ausführungsform des erfindungsgemäßen Verbundwerkstoffs, der durch Halteelemente in der Gießform gehalten ist, und
- Fig. 4: eine Detailansicht eines erfindungsgemäßen Verbundwerkstoffs in stark vergrößerter Darstellung.

Bei der Herstellung der verschiedenen Ausführungsformen des erfindungsgemäßen Verbundwerkstoffs 10 wurde das Metallbauteil - wie beispielsweise eine Aluschaumplatte oder ein Aluschaumkörper - jeweils in der Gießform zentriert und vorgeheizt sowie gegen ein Aufschwimmen in der Gießform gesichert.

Die Röntgenprüfung ergab jeweils, dass der erfindungsgemäße Verbundwerkstoff 10 in zufriedenstellender Weise porenarm ist.

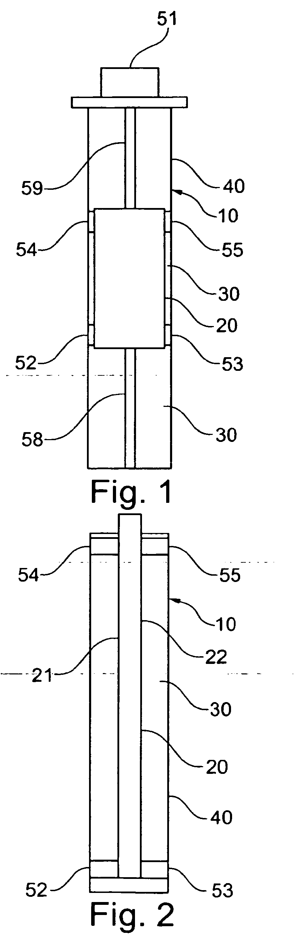

Gemäß Darstellung in Fig. 1 wird eine erste Ausführungsform des erfindungsgemäßen Verbundwerkstoffs 10 dadurch hergestellt, dass ein Aluschaumkörper 20, welcher ein nicht beschränkendes Beispiel für ein Metallbauteil darstellt, in einer Gießform 40 angeordnet wird. Mittels Halteelementen 52 bis 55, welche als Halteplatten oder -dorne ausgebildet sein können, wird der Aluschaumkörper 20 in der Gießform 40 fixiert, so dass er nicht in der Horizontalen verrutschen kann. Außerdem ist der Aluschaumkörper 20 durch Halteelemente 58 und 59, welche ebenfalls als Halteplatten oder -dornen ausgebildet sein können, durch ein Verrutschen in vertikaler Richtung in der Gießform 40 gesichert. Damit sich ein Aufschwimmen des Aluschaumkörpers 20 in der Gießform 40 beim Eingießen des Lauramids 30 wirkungsvoll verhindern lässt, belastet ein Halteelement 51 in Form eines schweren Halteklotzes den Aluschaumkörper 20 von oben. Wie aus der Darstellung von Fig. 1 ersichtlich ist, ist der Aluschaumkörper 20 vollständig von Lauramid 30 umschlossen. Genauer gesagt ist der Aluschaumkörper 20 nur im Wesentlichen vollständig von Lauramid 30 umgeben, da sich auf dem Aluschaumkörper 20 an denjenigen Stellen, an denen während des Eingießvorgangs Halteelemente 52 bis 55 und 58, 59 an dem Aluschaumkörper 20 anliegt, kein Lauramid 30 befindet.

Zur Herstellung der ersten Ausführungsform des erfindungsgemäßen Verbundwerkstoffs 10 wurde die Temperatur der Gießform auf 150 °C eingestellt, der Aluschaumkörper 20 wies eine Temperatur von 131 °C auf, und die Temperatur der Lauramidschmelze betrug 163 °C. Der Aluschaumkörper 20 wurde in einer Größe von 200 x 20 x 70 mm in einer Gießform mit den Maßen 200 x 30 x 200 mm angeordnet, nachdem er mit Ultraschall gereinigt wurde und sieben Stunden im Laborofen bei 140 °C getrocknet worden war. Anschließend wurde Lauramid eingegossen. Die Wandstärke des Lauramids an seinen größeren, hier seitlich links und rechts dargestellten Flächen betrug hierbei 5 mm. Die Vicat-Erweichungstemperatur des Verbundwerkstoffs 10 betrug 172,1 °C, während diejenige eines separat eingegossenen Probestabs 173 °C betrug. Bei der Gegenüberstellung der Vicat-Probe mit der Vicat-Versuchsplatte wurde eine Serienplatte (Probe) mit dem Vicat-Wert der Verbundplatte verglichen. Beide Gießlinge wurden aus der-gleichen Materialcharge unter den gleichen Gießbedingungen hergestellt. Die ermittelten Werte wurden in mehreren Versuchen (Abgüssen) verifiziert.

Aufgrund der relativ dünnen Wand von 5 mm wurden bereits vor dem Röntgen einige Schädigungen von außen sichtbar. Es wurde beobachtet, dass der Verbundwerkstoff 10 im Bereich des Aluschaumkörpers 20 nicht geschwunden war, also eine der Gießform entsprechende Dicke von 30 mm aufwies, während er an den übrigen Stellen aus reinem Lauramid 30 auf eine Dicke von 29,2 mm geschwunden war.

Der Gewichtsunterschied zwischen einem erfindungsgemäßen Verbundwerkstoff 10 aus mit Lauramid umgossenem Aluschaum und reinem Lauramid beträgt 30 %. So betrug bei gleichem Volumen die Masse des reinen Lauramids 320 g im Vergleich zu 213 g eines Verbundwerkstoffs 10.

Gemäß Darstellung in Fig. 2 ist bei einer zweiten Ausführungsform des erfindungsgemäßen Verbundwerkstoffs 10 das Metallbauteil als flächige Aluschaumplatte 20 ausgebildet. Die Aluschaumplatte 20 weist eine in Fig. 2 links dargestellte erste Hauptfläche 21 und eine rechts dargestellte zweite Hauptfläche 22 auf, die beide nahezu vollständig von Lauramid 30 bedeckt sind. Wie sich aus Fig. 2 ersehen lässt, ist die oben aus der Gießform 40 herausragende Stirnfläche der Aluschaumplatte 20 nicht mit Lauramid bedeckt, und auch die Stellen, an denen die Halteelemente-52 bis 55 an der Aluschaumplatte 20 während des Eingießvorgangs des Lauramids in die Gießform 40 anliegen, sind frei von Lauramid. Eine Halteplatte zum Sichern der Aluschaumplatte 20 gegen Aufschwimmen während des Eingießens ist in Fig. 2 der Einfachheit halber nicht dargestellt und ist ohnehin nicht Bestandteil des erfindungsgemäßen Verbundwerkstoffs 10.

Zur Herstellung der zweiten Ausführungsform des erfindungsgemäßen Verbundwerkstoffs 10 wurden zwei Aluschaumplatten 20 mit Abmessungen von jeweils 200 x 5 x 20 mm in einer Gießform von 200 x 30 x 200 mm angeordnet, nachdem sie mit Ultraschall gereinigt wurden und sieben Stunden im Laborofen bei 160 °C getrocknet worden waren. Anschließend wurde Lauramid eingegossen. Bei der Herstellung wurde die Temperatur der Gießform auf 156 °C eingestellt, die Aluschaumkörper 20 wiesen eine Temperatur von 123 °C auf, und die Temperatur der Lauramidschmelze betrug 161 °C. Die Vicat-Erweichungstemperatur sowohl des Verbundwerkstoffs 10 als auch eines separat eingegossenen Probestabs betrug 177 °C. An ihren Hauptflächen 21, 22 waren die Aluschaumplatten 20 mit Lauramid bedeckt, welches zunächst eine Wandstärke von ca. 12,5 mm aufwies. Aus diesem Gießling wurden dann die beiden Aluschaumplatten 20 herausgesägt und abgefräst, so dass bei einer der beiden Varianten das Lauramid eine Wandstärke von 3 mm aufwies, während es bei der anderen Variante eine Wandstärke von 5 mm aufwies. Bei dem Verbundwerkstoff 10 mit 3 mm Wandstärke des Lauramids konnten mehrere Schädigungen entlang der Schaumoberfläche beobachtet werden, welche durch das Fräsen angeschnitten wurden. Einzelne Schädigungen waren somit in einem Bereich von 3 mm zum Metallschäumling bzw. Metallbauteil. Bei einer verbleibenden Restwandstärke von 5 mm konnten auf der bearbeiteten Fläche keine Fehler festgestellt werden.

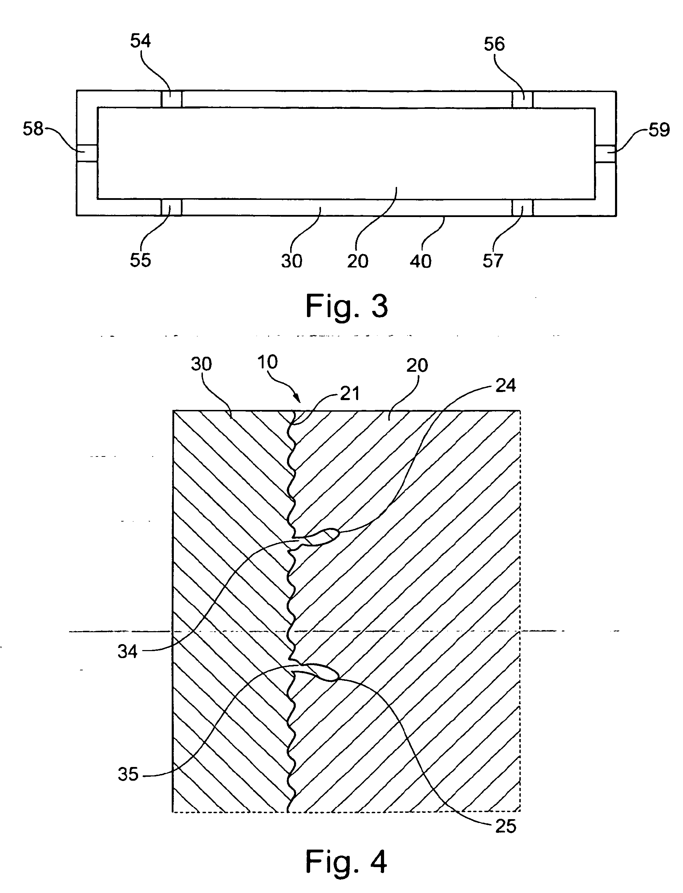

Fig. 3 zeigt eine Schnittansicht von oben durch eine Gießform 40, in der eine Aluschaumplatte 20 mit den Maßen 295 x 45 x 9 mm angeordnet ist. Halteelemente 54 bis 59 sorgen für eine Zentrierung der Aluschaumplatte 20 in der Gießform 40. Außerdem ist die Aluschaumplatte 20 gegen Aufschwimmen in der Gießform 40 gesichert, was jedoch zeichnerisch nicht dargestellt ist. Durch Eingießen von Lauramid wurde eine dritte Ausführungsform eines erfindungsgemäßen Verbundwerkstoffs 10 hergestellt, bei dem das Lauramid eine Wandstärke von ca. 5 mm aufweist. Von dieser dritten Ausführungsform wurden versuchsweise in einer Gießform mit den Maßen 200 x 30 x 200 mm zwei Varianten hergestellt: Bei einer ersten Variante wurde ein Aluschaum mit 30 ppi (Poren pro Inch) verwendet, während bei einer zweiten Variante ein Aluschaum mit 40 ppi verwendet wurde. Beide Varianten wurden mit Außenmaßen von 307 x 53 x 20 mm hergestellt. Bei der ersten Variante betrug die Masse 342 g, während bei der zweiten Variante die Masse 346 g betrug. Im Vergleich dazu wurde ein Körper mit den gleichen Außenmaßen ohne Verwendung von Aluminiumschaum nur aus Lauramid gegossen; dieser Körper wies eine Masse von 325 g auf.

Durch Röntgenuntersuchungen wurde festgestellt, dass bei den zwei Varianten unter Verwendung einer Aluschaumplatte die gesamte Schaumstruktur dieser Aluplatte mit Lauramid ausgegossen war. Bei der Herstellung dieser Ausführungsform wurde die Temperatur der Gießform 40 auf 152 °C gehalten, die Temperatur der Aluschaumplatte betrug 130 °C, und die Temperatur der Lauramidschmelze betrug 160 °C. Die Vicat-Erweichungstemperatur der auf diese Weise hergestellten Verbundwerkstoffe wurde zu 170,3 °C bestimmt. Diese Temperatur liegt am untersten Ende der zulässigen Materialspezifikation für Lauramid. Die Vicat-Erweichungstemperatur eines separat gegossenen Probestabs wurde zu 174 °C bestimmt.

Die jeweils zur Herstellung der beiden letztgenannten Verbundwerkstoffvarianten verwendeten Aluschaumplatten wurden nicht gewaschen und auch keiner Ultraschallbehandlung unterzogen.

Fig. 4 zeigt in vergrößerter Darstellung ein Beispiel eines erfindungsgemäßen Verbundwerkstoffs 10. Genauer gesagt ist dort die Grenzfläche zwischen der Aluschaumplatte 20 und dem Lauramid 30 in vergrößertem Maßstab dargestellt. Hierbei ist gut sichtbar, dass die beispielsweise in Fig. 2 als glatte Fläche dargestellte erste Hauptfläche 21 in Wirklichkeit eine sehr große Rauigkeit aufweist, was durch die Tatsache bedingt ist, dass es sich bei der Aluschaumplatte 20 um ein geschäumtes Gebilde handelt. Dabei ist nicht nur zu berücksichtigen, dass die erste Hauptfläche 21 eine große Rauhigkeit aufweist, sondern dass sich auch hier nur beispielhaft dargestellte Poren 24 und 25 ins Innere des Aluschaumkörpers 20 hinein erstrecken. In diese Poren 24 und 25 hinein erstrecken sich entsprechende Befestigungssporne bzw. Befestigungsvorsprünge 34, 35, die durch das Eindringen des Lauramids 30 in diese Poren 24, 25 gebildet werden. Dadurch kann eine besonders innige und dauerhafte Verbindung, insbesondere durch Verhakung bzw. Vernetzung, zwischen dem Lauramid und dem Aluschaumkörper erzeugt werden.

Es ist festzuhalten, dass die unter Bezug auf einzelne Ausführungsformen beschriebenen Merkmale der Erfindung sowohl bei dem Verbundwerkstoff als dem Verfahren zu dessen Herstellung - wie beispielsweise die genaue Ausgestaltung und die Dimensionen des Metallbauteils und der Außenhülle aus Lauramid, einzelne Verfahrensparameter wie beispielsweise Temperaturen oder Werkstoffeigenschaften - auch bei anderen Ausführungsformen vorhanden sein können, außer wenn es anders angegeben ist oder sich aus technischen Gründen von selbst verbietet.

**Bezugszeichenliste**

| | |
|---|---|
| 10 | Verbundwerkstoff |
| 20 | Metallbauteil/Aluschaumplatte/Aluschaumkörper |
| 21 | erste Hauptfläche |
| 22 | zweite Hauptfläche |
| 24, 25 | Pore |
| 30 | Lauramid |
| 34, 35 | Befestigungsvorsprung |
| 40 | Gießform |
| 51-59 | Halteelement |

## Patentansprüche

1. Verbundwerkstoff (10), aufweisend ein Metallbauteil (20) und den Werkstoff Lauramid^{®} (30), das ein Polyamid-werkstoff der klasse PA 12G ist, der das Metallbauteil (20) zumindest teilweise umgibt,
**dadurch gekennzeichnet,**
**dass** das Metallbauteil (20) ein Metallschaumbauteil, vorzugsweise ein Aluminiumschaumbauteil, ist.

2. Verbundwerkstoff (10) nach Anspruch 1,
**dadurch gekennzeichnet, dass** das Metallschaumbauteil (20) zumindest an seinen Rändern offenporig ist.

3. Verbundwerkstoff (10) nach Anspruch 1 oder 2,
**dadurch gekennzeichnet, dass** das Metallschaumbauteil (20) in Lauramid^{®} eingegossen ist, insbesondere vollständig von Lauramid^{®} (30) umschlossen ist.

4. Verbundwerkstoff (10) nach Anspruch 1 oder 2,
**dadurch gekennzeichnet, dass** das Metallschaumbauteil (20) als flächiges Bauteil mit zwei Hauptflächen (21, 22) ausgebildet ist und nur die zwei Hauptflächen (21, 22) von Lauramid^{®} (30) bedeckt sind.

5. Verbundwerkstoff (10) nach einem der vorhergehenden Ansprüche, **dadurch gekennzeichnet, dass** das Lauramid^{®} (30) eine Wandstärke von mindestens 5 mm aufweist.

6. Verfahren zur Herstellung eines Verbundwerkstoffs (10), insbesondere eines Verbundwerkstoffs (10) nach einem der vorhergehenden Ansprüche, **umfassend die Schritte:** Bereitstellen eines Metallschaumbauteils (20), vorzugsweise eines Aluminiumschaumbauteils, und Umgießen des Metallschaumbauteils (20) mit dem Werkstoff Lauramid^{®} (30).

7. Verfahren nach Anspruch 6,
**dadurch gekennzeichnet, dass** das Metallschaumbauteil (20) vor dem Umgießen in einer Gießform (40) angeordnet und mittels Halteelementen (51-59) in der Gießform (40) fixiert wird.

8. Verfahren nach Anspruch 7,
**dadurch gekennzeichnet, dass** die Temperatur der Gießform (40), und vorzugsweise die Temperatur des Metallschaumbauteils (20), beim Eingießen des Lauramids^{®} (30), 140 °C bis 160 °C, vorzugsweise 150 °C bis 154 °C, weiter vorzugsweise 152 °C, beträgt.

9. Verfahren nach einem der Ansprüche 6 bis 8,
**dadurch gekennzeichnet, dass** das Metallschaumbauteil (20) vor dem Umgießen auf eine Temperatur im Bereich von 120 °C bis 160 °C, vorzugsweise von 130 °C bis 150 °C, weiter vorzugsweise auf 140 °C, vorgeheizt wird.

10. Verfahren nach einem der Ansprüche 6 bis 9,
**dadurch gekennzeichnet, dass** die Temperatur des geschmolzenen Lauramids^{®} (30) beim Umgießen 150 °C bis 170 °C, vorzugsweise 158 °C bis 162 °C, weiter vorzugsweise 160 °C, beträgt.

11. Verfahren nach einem der Ansprüche 6 bis 10,
**dadurch gekennzeichnet, dass** das Metallschaumbauteil (20) vor dem Umgießen gewaschen oder einer Ultraschallbehandlung unterzogen wird.

## Claims

1. A composite material (10), comprising a metal component (20) and the material Lauramid® (30), which is a polyamide material of the class PA 12G, which at least partially surrounds the metal component (20),
**characterized in**
**that** the metal component (20) is a metal foam component, preferably an aluminum foam component.

2. The composite material (10) according to claim 1,
**characterized in that** the metal foam component (20) is open-pored at least at its edges.

3. The composite material (10) according to claim 1 or 2,
**characterized in that** the metal foam component (20) is encapsulated with Lauramid®, in particular completely enclosed by Lauramid® (30).

4. The composite material (10) according to claim 1 or 2,
**characterized in that** the metal foam component (20) is designed as a flat component comprising two main surfaces (21, 22), and **in that** only the two main surfaces (21, 22) are covered by Lauramid® (30).

5. The composite material (10) according to any one of the preceding claims, **characterized in that** the Lauramid® (30) has a wall thickness of at least 5 mm.

6. A method for producing a composite material (10), in particular a composite material (10) according to one of the preceding claims, **comprising the steps:** providing a metal foam component (20), preferably an aluminum foam component, and encapsulating the metal foam component (20) with the material Lauramid® (30).

7. The method according to claim 6,
**characterized in that** prior to encapsulation the metal foam component (20) is arranged in a casting mold (40) and secured in the casting mold (40) by means of retaining elements (51-59).

8. The method according to claim 7,
**characterized in that**, when the Lauramid® (30) is poured, the temperature of the casting mold (40), and preferably the temperature of the metal foam component (20), amounts to 140°C to 160°C, preferably 150°C to 154°C, more preferably about 152°C.

9. The method according to any one of claims 6 to 8,
**characterized in that** prior to encapsulation the metal foam component (20) is pre-heated to a temperature in the range of 120°C to 160°C, preferably of 130°C to 150°C, more preferably to 140°C.

10. The method according to any one of claims 6 to 9,
**characterized in that** during encapsulation the temperature of the molten Lauramid® (30) amounts to 150°C to 170°C, preferably 158°C to 162°C, more preferably 160°C.

11. The method according to any one of claims 6 to 10,
**characterized in that** prior to encapsulation the metal foam component (20) is washed or subjected to an ultrasound treatment.

## Revendications

1. Matériau composite (10), comprenant un composant en métal (20) et le matériau Lauramid®, qui est un matériau en polyamide de la classe PA 12G, qui entoure au moins partiellement le composant en métal (20),
**caractérisé en ce que**
le composant en métal (20) est un composant en mousse de métal, de préférence un composant en mousse d'aluminium.

2. Matériau composite (10) selon la revendication 1,
**caractérisé en ce que** le composant en mousse de métal (20) est un matériau à pores ouverts, au moins au niveau de ses bordures.

3. Matériau composite (10) selon la revendication 1 ou 2,
**caractérisé en ce que** le composant en mousse de métal (20) est intégré par coulée dans le Lauramid®, en particulier entièrement enfermé par le Lauramid® (30).

4. Matériau composite (10) selon la revendication 1 ou 2,
**caractérisé en ce que** le composant en mousse de métal (20) est réalisé comme un composant surfacique avec deux surfaces principales (21, 22), et seules les deux surfaces principales (21, 22) sont couvertes de Lauramid® (30).

5. Matériau composite (10) selon l'une des revendications précédentes, **caractérisé en ce que** le Lauramid® (30) présente une épaisseur de paroi d'au moins 5 mm.

6. Procédé pour la fabrication d'un matériau composite (10), en particulier un matériau composite (10) selon l'une des revendications précédentes, comprenant les étapes consistant à :
préparer un composant en mousse de métal (20), de préférence un composant en mousse d'aluminium, et intégration du composant en mousse de métal (20) par coulée avec le matériau Lauramid® (30).

7. Procédé selon la revendication 6,
**caractérisé en ce que**, avant l'intégration par coulée, le composant en mousse de métal (20) est agencé dans un moule de coulée, et est fixé dans le moule de coulée (40) au moyen d'éléments de maintien (51-59).

8. Procédé selon la revendication 7,
**caractérisé en ce que** la température du moule de coulée (40), et de préférence la température du composant en mousse de métal (20), lors de la coulée du Lauramid® (30), s'élève à 140°C à 160°C, de préférence 150°C à 154°C, et de manière plus préférée à 152°C.

9. Procédé selon l'une des revendications 6 à 8,
**caractérisé en ce que** le composant en mousse de métal (20) est préchauffé, avant l'intégration par coulée, à une température dans la plage de 120°C à 160°C, de préférence de 130°C à 150°C, et de manière plus préférée à 140°C.

10. Procédé selon l'une des revendications 6 à 9,
**caractérisé en ce que** la température du Lauramid® (30) en fusion s'élève, lors de la coulée, à 150°C à 170°C, de préférence 158°C à 162°C, de manière plus préférée à 160°C.

11. Procédé selon l'une des revendications 6 à 10,
**caractérisé en ce que** le composant en mousse de métal (20) est lavé avant l'intégration par coulée, ou est soumis à un traitement aux ultrasons.
